(19) Europäisches Patentamt / European Patent Office / Office européen des brevets

(11) **EP 3 021 234 A1**

(12) **EUROPEAN PATENT APPLICATION**

(43) Date of publication:
**18.05.2016 Bulletin 2016/20**

(51) Int Cl.:
***G06F 17/30*** *(2006.01)*

(21) Application number: **15193574.9**

(22) Date of filing: **09.11.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **17.11.2014 US 201414542954**

(71) Applicant: **Siemens Product Lifecycle
Management Software Inc.
Plano, TX 75024-6612 (US)**

(72) Inventor: **WITTE, Martin
91126 Schwabach (DE)**

(74) Representative: **Isarpatent
Patent- und Rechtsanwälte Behnisch Barth
Charles
Hassa Peckmann & Partner mbB
Friedrichstrasse 31
80801 München (DE)**

(54) **CONCEPTUALIZATION AND SEARCH OF BLOCK DIAGRAM BASED MODELS**

(57) Methods for conceptualization and search of block diagram based models. A method includes receiving a selected model (815) from a model library (200) comprised of a plurality of models (205), mapping physical quantities (305) to each of the plurality of properties (410) of the selected model (815), associating a semantic interpretation (535) to each of the plurality of properties (410), defining a similarity determination (500) comparing the semantic interpretation (535) of a first property (520) and the semantic interpretation (535) of a second property (525), determining property similarities (515) comparing the specific properties (620) for each of the plurality of models (205) to the specific properties (620) of the selected model (815) by applying the similarity determination (500), determining a model similarity (705) based on a weighted summation (700) of the property similarities (515), and creating a similarity list (800) of similar models (805) with sufficient model similarities (810).

Figure 9

**Description**

TECHNICAL FIELD

The present disclosure is directed, in general, to computer-aided design, visualization, and manufacturing systems, product lifecycle management ("PLM") systems, and similar systems, that manage data for products and other items (collectively, "Product Data Management" systems or PDM systems).

BACKGROUND OF THE DISCLOSURE

Product data management (PDM) systems manage product lifecycle management (PLM) systems and other data. Improved systems are desirable.

SUMMARY OF THE DISCLOSURE

Various disclosed embodiments include a method for conceptualization and search of block diagram based models. The method includes receiving a selected model from a model library comprised of a plurality of models, mapping physical quantities to each of the plurality of properties of the selected model, associating a semantic interpretation to each of the plurality of properties, defining a similarity determination comparing the semantic interpretation of a first property and the semantic interpretation of a second property, determining property similarities comparing the specific properties for each of the plurality of models to the specific properties of the selected model by applying the similarity determination, determining a model similarity based on a weighted summation of the property similarities, and creating a similarity list of similar models with sufficient model similarities.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:

Figure 1 illustrates a block diagram of a data processing system in which an embodiment can be implemented;

Figure 2 illustrates a model library including a plurality of models in accordance with disclosed embodiments;

Figure 3 illustrates a standard description table in accordance with disclosed embodiments;

Figure 4 illustrates a structure of a model including a plurality of properties in accordance with disclosed embodiments;

Figure 5 illustrates a similarity determination between two properties in accordance with disclosed embodiments;

Figure 6 illustrates a similarity determination comparing tuples from a first model and a second model in accordance with disclosed embodiments;

Figure 7 illustrates a weighted summation of the model similarity in accordance with disclosed embodiments;

Figure 8 illustrates a similarity list containing similar models with sufficient model similarities to the selected model in accordance with disclosed embodiments;

Figure 9 illustrates a flowchart of a process for creating a similar models list for ranking similar models with sufficient model similarities in accordance with disclosed embodiments; and

Figure 10 illustrates a flowchart of a process for determining a property similarity comparing the properties for a first model to the properties for a second model in accordance with disclosed embodiments.

## DETAILED DESCRIPTION

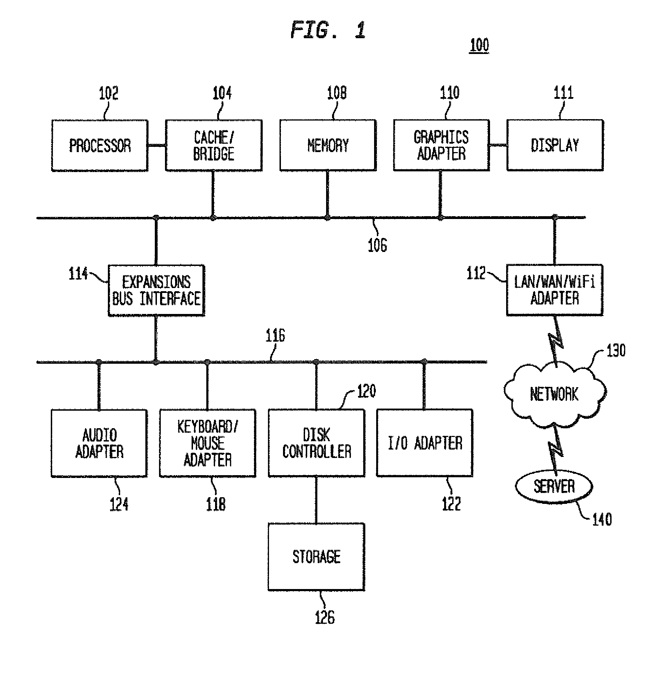

FIGURES 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Many engineering tools use block diagram based models, sometimes called "ID models." "1D models" consist of blocks representing and modeling elements described by properties, such as ports, internal variables, parameters, and other properties for describing connection points between model elements. Although the model structure is syntactically simple, systematically searching for models configured with desired structural properties and semantic meaning, and finding models combined from different 1D modeling environment is a complex task. One fundamental obstacle in model synthesis is discovering sufficient models fulfilling an incomplete structural requirement.

Model properties and characteristics are reformulated into so-called "concepts," making them independent from tool vendor or model type specific formats and allowing comparative models and model properties. Structural and property based similarities of models are expressed in a characteristic number representing a metric between models, making it possible to systematically search for models with desired properties. The number can be weighted and adapted to the search purpose.

Models can be compared by their properties using "concepts." The term "concept" is defined in the standards on conceptualization, such as ISO 704. Examples of properties for the model include ports, internal variables, and parameters. The ports contain an internal structure configured of port variables. The port variables, internal variables, and parameters in the model are represented by variable units. The variable units are based upon the "concept" of the interpretation of representing a physical quantity. "Concepts" are implementation independent, tool and model independent, and compare models independent of the modeling environment. The structure of the models, including the ports, internal variables, and parameters, are used for conceptualization and the derived "concepts" are used for comparing models.

Figure 1 illustrates a block diagram of a data processing system in which an embodiment can be implemented, for example as a PDM system particularly configured by software or otherwise to perform the processes as described herein, and in particular as each one of a plurality of interconnected and communicating systems as described herein. The data processing system depicted includes a processor 102 connected to a level two cache/bridge 104, which is connected in turn to a local system bus 106. Local system bus 106 may be, for example, a peripheral component interconnect (PCI) architecture bus. Also connected to local system bus in the depicted example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware depicted in Figure 1 may vary for particular implementations. For example, other peripheral devices, such as an optical disk drive and the like, also may be used in addition or in place of the hardware depicted. The depicted example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

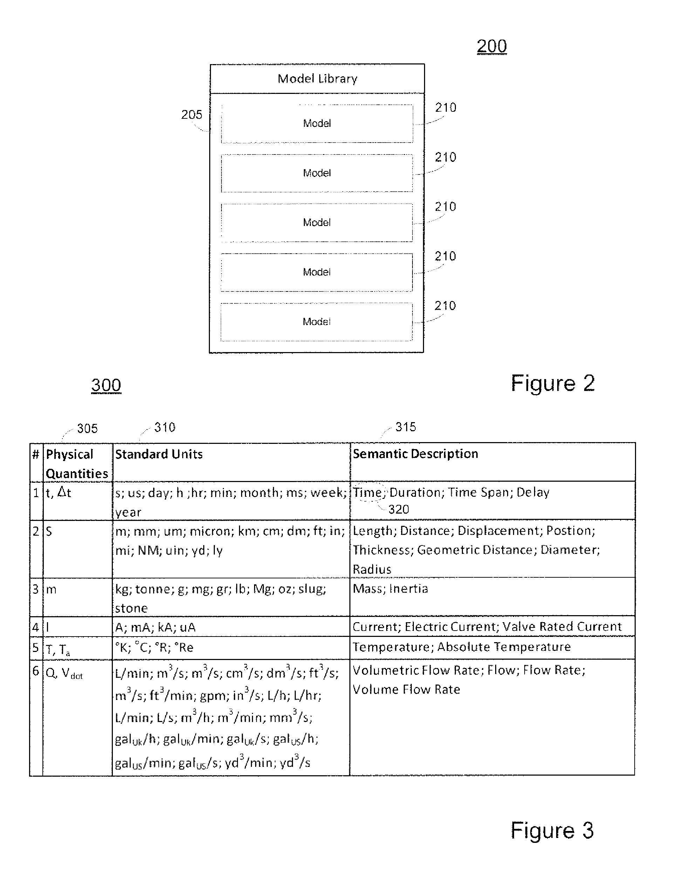

Figure 2 illustrates a model library 200 including a plurality of models 205 in accordance with disclosed embodiments. The models 210 are organized in the model library 200. The models 210 and model library 200 are discussed in more detail below.

Figure 3 illustrates a standard description table 300 in accordance with disclosed embodiments. The standard description table 300 contains physical quantities 305 with standard units 310 and semantic descriptions 315. The physical quantities 305 are quantified by the standard units 310 and described by the semantic descriptions 315. For example, physical quantity 305 "t" can be quantified by the standard units 310 "s" (seconds), "us'" (microseconds), "day," "h" (hour), "hr" (hour), "min" (minutes), "month," "ms" (milliseconds), "week," or "year" and described by the semantic descriptions 315 "time," "duration," "time span," or "delay." Each physical quantity includes a base description 320, which can be defined manually by a user or by default in the standard description table 300. For example, "time" is the base description 320 for physical quantity 305 "t." Physical quantities having no physical meaning, null, such as coefficients in a PID controller or events carrying information, can still have a standardized semantic description. The standard description table 300, including the physical quantities 305, the standard units 310, and the semantic descriptions 315, is for illustration purposes only and provide a non-exhaustive example of the elements contained within.

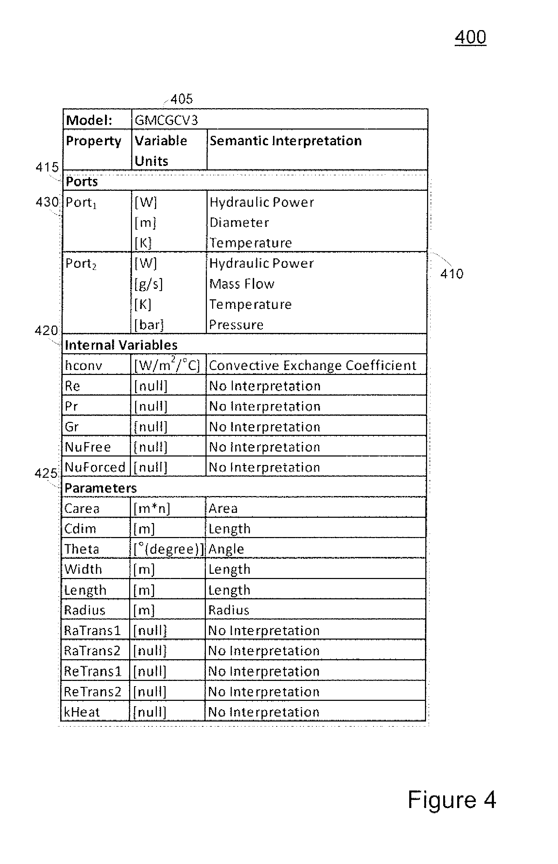

Figure 4 illustrates a structure 400 of a model 405 including a plurality of properties 410 in accordance with disclosed embodiments. The structure 400 of a typical model 405 contains a plurality of properties 410 including ports 415, internal variables 420, and parameters 425. The model 405 can include multiple specific properties 430 of a property type, such as, $Port_1$ and $Port_2$ are both ports 415.

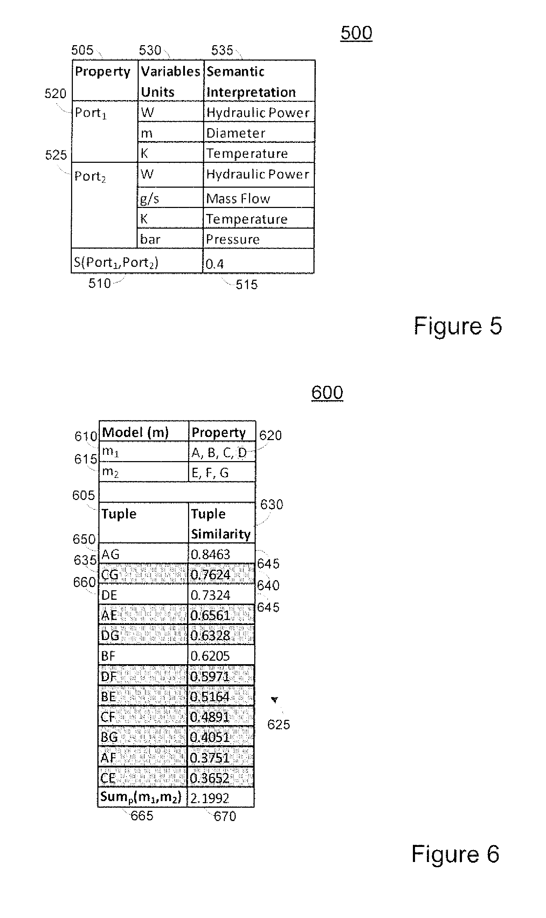

Figure 5 illustrates a similarity determination 500 between two properties 505 in accordance with disclosed embodiments. The similarity determination 500 can incorporate a similarity function 510 to determine a property similarity 515 between a first property 520 and a second property 525. The similarity function 510 can compare the variables units 530 or the semantic interpretation 535 for each of the properties 505. In certain embodiments, the similarity function 510 is defined via an equation, such as:

$$S(property_1, property_2) := \frac{n_0}{(n_1 + n_2 - n_0)} \qquad (1)$$

In equation 1, $S(property_1, property_2)$ is a function for determining the similarity between a first property 520, $property_1$, and a second property 525, $property_2$, "$n_1$" is the number of variable units 530 or semantic interpretations 535 for $property_1$, "$n_2$" is the number of variable units 530 or semantic interpretations 535 for $property_2$, and "$n_0$" is the number of the same variable units 530 or semantic interpretations 535 in both $property_1$ and $property_2$. When all the variable units 530 or semantic interpretation 535 in $property_1$ exist in $property_2$, then $n_0 == n_1$, which provides equation 2:

$$S(property_1, property_2) := \frac{n_1}{n_2} \qquad (2)$$

In the illustrated embodiment, the similarity determination 500 compares $Port_1$ and $Port_1$ from the model illustrated in Figure 4. The similarity determination 500 uses a similarity function 410, such as from equation 1, where $Port_1$

is property$_1$ and Port$_2$ is property$_2$. Port$_1$ contains three variable units 530 or semantic interpretations 535 providing a value of three for n$_1$ and Port$_2$ contains four variable units 530 or semantic interpretations 535 providing a value of four for n$_2$. Both Port$_1$ and Port$_2$ contain "W" and "K" variable units 530 and respective semantic interpretations 535 of "Hydraulic Power" and "Temperature," providing a value of two for n$_0$. The similarity function 510 provides a property similarity 515 of 0.4 between Port$_1$ and Port$_2$.

$$S(Port_1, Port_2) := \frac{n_0}{(n_1 + n_2 - n_0)} = \frac{2}{(3+4-2)} = 0.4 \qquad (3)$$

Figure 6 illustrates a tuple similarity determination 600 comparing tuples 605 from a first model 610 and a second model 615 in accordance with disclosed embodiments. In this context, a tuple 605 is a pair of specific properties 620, where each tuple 605 includes one specific property 620 from the first model 610 and one specific property 620 from the second model 615. The tuple similarity determination 600 can incorporate a similarity function, such as the property similarity function 510 illustrated in Figure 5, to determine a tuple similarity 630 between the specific properties 620 of a first model 610 and a second model 615. The tuple similarity determination 600 creates a tuple list 625 containing the tuples 605 and tuple similarities 630. The tuples 605 are placed in the list as unselected tuples 635 comprising all the different combinations of specific properties 620 with a respective tuple similarity 640. The unselected tuples 635 are ordered based on their respective tuple similarity 640. The tuple similarity determination 600 selects the tuple 605 with the highest tuple similarity 645 and removes the unselected tuples 635 which contain the specific property 620 of the first model 610 or the specific property 620 of the second model 615 of the selected tuple 650. The tuple similarity determination 600 proceeds to the tuple 605 with a next highest tuple similarity 655 and removes the unselected tuples 635 which contain the specific property 620 of the first model 610 or the specific property 620 of the second model 615 of the next selected tuple 660. The tuple similarity determination 600 continues selecting tuples 605 until all the unselected tuples 635 are selected or removed. Once the tuple list 625 contains only selected tuples 650, the tuple similarity determination 600 takes a summation 665 the respective tuple similarities 640 of the selected tuples 650 for a total tuple similarities 670.

In the illustrated embodiment, the tuple similarity determination 600 compares the specific properties 620 of a first model 610, m$_1$, to the specific properties of a second model 615, m$_2$. m$_1$ contains specific properties 620 A, B, C, and D and m2 contains specific properties 620 E, F, and G. The tuple list 625 contains all possible tuples 605 of combinations of one specific property 620 from m$_1$ and one specific property 620 from m$_2$. AG is chosen as the selected tuple 650 with the highest tuple similarity 630. Tuples 605 CG, AE, DG, BG, and AF are removed from the tuple list 625 because they contain specific property 620 A or G. DE is chosen as the next highest unselected tuple 660 and tuples 605 DG, DF, BE, and CE are removed. BF is chosen as the next highest unselected tuple 660 and tuple 605 CF is removed. Because the only tuples 605 remaining in the tuple list 625 are selected tuples 650, the summation 665 of the respective tuple similarities 640 is taken and provides a total tuple similarity 670 of 2.1992.

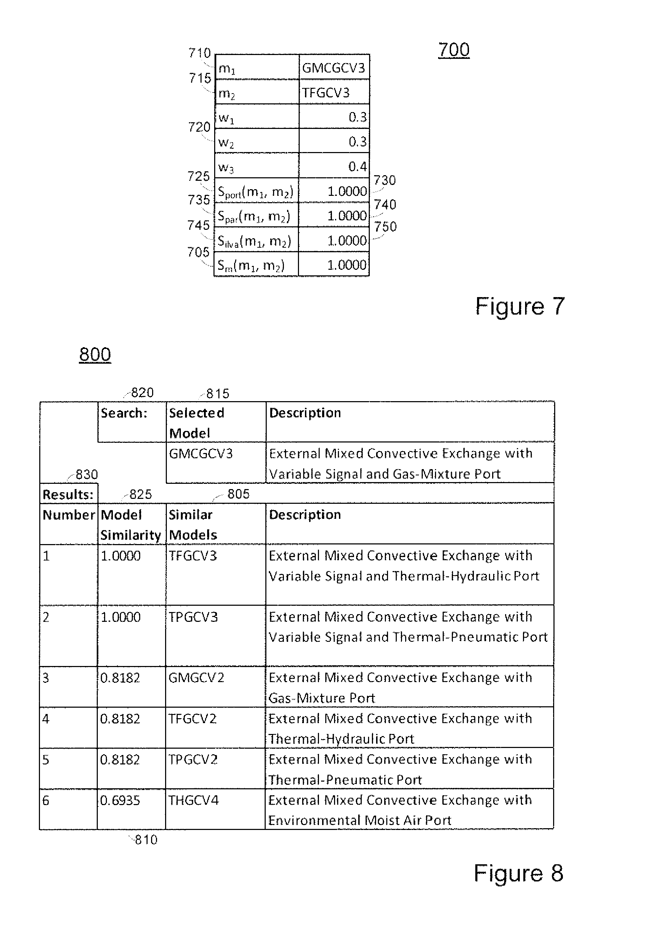

Figure 7 illustrates a weighted summation 700 of the model similarity 705 in accordance with disclosed embodiments. The model similarity 705 can be determined by a weighted summation 700 of the different property similarities between a first model 710 and a second model 715. The weighted summation can include a weight 720 for each property similarity.

In the illustrated embodiment, the models contain properties includes ports, parameter and internal variables. A port similarity function 725 determines the port similarity 730, a parameter similarity function 735 determines the parameter similarity 740, and an internal variable similarity function 745 determines the internal variable similarity 750 between the first model 710 and the second model 715.

In certain embodiments, the similarity functions are defined via an equation, such as:

$$S_{prop}(model_1, model_2) := \frac{Sum_p}{(n_1 + n_2 - Sum_p)} \qquad (4)$$

In equation 4, $S_{prop}(model_1, model_2)$ is a function for determining the similarity between a first model 710, $model_1$, and a second model 720, $model_2$, "n$_1$" is specific properties for $model_1$, "n$_2$" is the number of specific properties for $model_2$, and "Sum$_p$" is the total tuple similarity in both property$_1$ and property$_2$.

Figure 8 illustrates a similarity list 800 containing similar models 805 with sufficient model similarities 810 to the selected model 815 in accordance with disclosed embodiments. A similar model search 820 for the selected model 815 determines a model similarity 825 for similar models 805 in the model library. The similar model results 830 are returned to the user with the similar models 805 which are determined to contain a sufficient model similarity 810 to the selected model 815. The sufficient model similarity 810 limits the amount of similar models 805 in the similarity list 800 and the sufficient model similarity 810 can be a fixed or variable amount for model similarity 825. More complex models may require a greater model similarity 825 for exchanging similar models 805. The sufficient model similarity 810 can be stored in the system or be input with the selected model 815 in the similar model search 820.

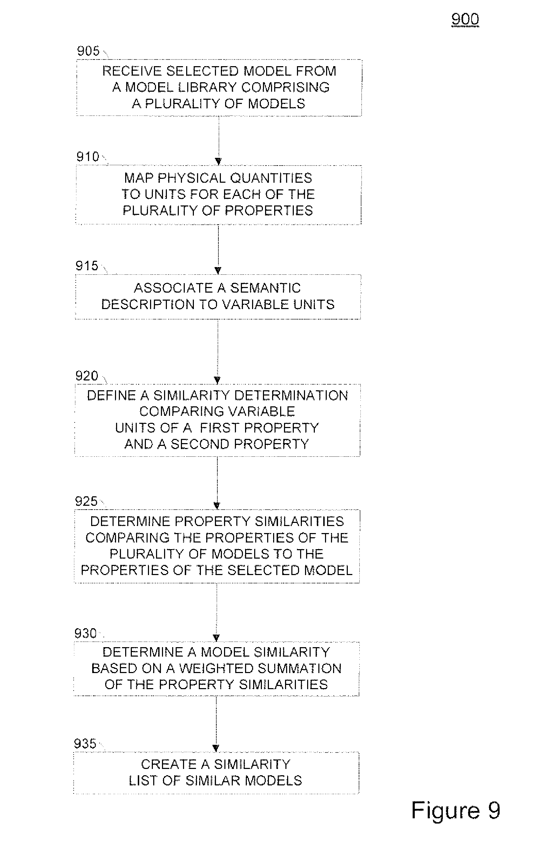

Figure 9 illustrates a flowchart of a process 900 for creating a similar models list for ranking similar models with sufficient model similarities in accordance with disclosed embodiments.

In step 905, the system receives a selected model from a model library comprising a plurality of models. Each model of the plurality of models includes properties comprising ports, internal variables, and parameters.

In step 910, the system maps physical quantities to units for each of the plurality of properties of the selected model. Each physical quantity can include multiple equivalent units, typically provided as a string. The units for the properties are mapped to a standard physical quantity based on a list of standard units for relevant physical quantities.

In step 915, the system associates a semantic description to variable units based on the physical quantity mapped to the unit for a property. A physical quantity can include multiple semantic meanings, which can be standardized in a list mapping the physical quantity with possible semantic meanings. The mapping of the physical quantity with semantic meanings can be automated by using the textual descriptions or variable unit names that all engineering systems provide. An interpretation will be chosen when the text includes a textual description or variable unit provided by the engineering system. Otherwise, the mapping is performed manually or by default, such as, a physical base unit.

In step 920, the system defines a similarity determination comparing variable units of a first property and a second property. In certain embodiments, the similarity determination is defined via an equation, such as:

$$S(property_1, property_2) := \frac{n_0}{(n_1 + n_2 - n_0)} \qquad (5)$$

In equation 5, $S(property_1, propety_2)$ is a function for determining the similarity between $property_1$ and $property_2$, $n_1$ is the number of variable units for $property_1$, $n_2$ is the number of variable units for $property_2$, and $n_0$, is the number of variable units of the same unit or semantic interpretation in both $property_1$ and $property_2$. When all the variable units in $property_1$ exist in $property_2$, then n0==n1, which provides:

$$S(property_1, property_2) := \frac{n_1}{n_2} \qquad (6)$$

In step 925, the system determines property similarities, "$S_{prop}$," comparing the properties for each of the plurality of models to the properties of the select model by applying the similarity determination. Examples of property similarities determined include a port similarity, "$S_{port}$;" a parameter similarity, "$S_{par}$;" and an internal variable similarity, "$S_{ilva}$," between models.

In step 930, the system determines a model similarity based on a weighted summation of the property similarities. In certain embodiments, the model similarity is determined via an equation, such as:

$$S(m_1, m_2) = w_1 \cdot S_{port}(m_1, m_2) + w_2 \cdot S_{par}(m_1, m_2) + w_3 \cdot S_{ilva}(m_1, m_2) \qquad (7)$$

In equation 7, the sum of weights, 'w1," "w2," and "w3," is equal to one. In certain embodiments, the model similarity is determined via a different equation, such as:

$$S_g(m_1, m_2) = \frac{\left(a_0 \cdot S_{port}(m_1, m_2)\right)}{\left(a_1 + a_2 - \left(a_{0+} S_{port}(m_1, m_2)\right)\right)} \qquad (8)$$

In equation 8, "$a_1$" is the number of ports, internal variables, and parameters of $m_1$, and "$a_2$" is the number of ports, internal variables, and parameters of "$m_2$."

In step 935, the system creates a similarity list of similar models with a sufficient model similarity compared to the selected model. The similar models are sufficiently similar as alternatives to the selected model. In certain embodiments similar models containing properties with different interpretations, such as "mechanical power" instead of "hydraulic power," are removed from the list. The similar models from the similarity list can be selected as an alternative part and replace the selected model. The sufficient model similarity limits the amount of similar models in the similarity list and the sufficient model similarity can be a fixed or variable amount for model similarity. More complex models may require a greater model similarity for exchanging similar models. The sufficient model similarity can be stored in the system or be input with the selected model in the similar model search.

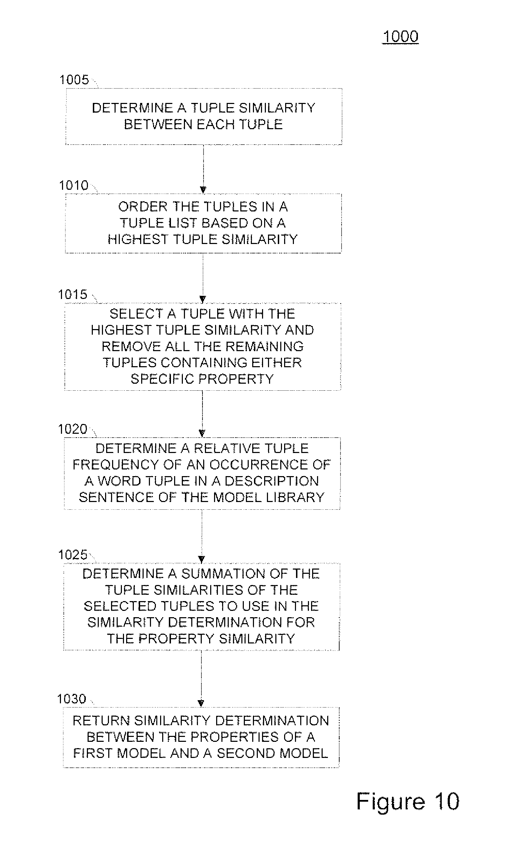

Figure 10 illustrates a flowchart of a process 1000 for determining a property similarity comparing the properties for a first model to the properties for a second model in accordance with disclosed embodiments that may be performed, for example, by a PLM or PDM system. The similarity of models "$m_1$" and "$m_2$" based on a property are determined based on the property similarity, where "$n_1$" is the number of specific properties of model "$m_1$" and "$n_2$" is the number of specific properties of model "$m_2$."

In step 1005, the system determines a tuple similarity between each tuple, where a tuple includes a specific property of a first model "$m_1$" and a specific property of a second model "$m_2$." For models "$m_1$" and "$m_2$," a total number of "$n_1$" x "$n_2$" possible tuples exists.

In step 1010, the system creates a tuple list containing unselected tuples with respective tuple similarities. The system orders the tuples in a tuple list based on tuple similarity. The list can be descending or ascending, as long as the tuples are ordered based on the tuple similarity.

In step 1015, the system selects a tuple with the highest tuple similarity and removes all the remaining tuples which contain either the specific property of the first model or the specific property of the second model of the selected tuple.

In step 1020, the system repeats step 1015 for the unselected tuples until all the remaining tuples are selected or removed.

In step 1025, the system determines a summation, "$S_{ump}$" of the tuple similarities of the selected tuples to replace "$n_0$" in the similarity determination for the property similarity, which is defined as equation 9:

$$S_{prop}(m_1, m_2) := \frac{S_{ump}}{(n_1 + n_2 - S_{ump})} \qquad (9)$$

In certain embodiments, the system can calculate the summation of each unique combination of tuples, with a specific property only occurring once in the unique combination. "$S_{ump}$" is the highest summation provided by a unique combination of tuples.

In step 1030, the system returns the similarity determination comparing the properties of a first model to the properties for a second model.

Of course, those of skill in the art will recognize that, unless specifically indicated or required by the sequence of operations, certain steps in the processes described above may be omitted, performed concurrently or sequentially, or performed in a different order.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims. Moreover, none of these claims are intended to invoke 35 USC §112(f) unless the exact words "means for" are followed by a participle.

FURTHER EMBODIMENTS

1. A method for product data management, the method performed by a data processing system (100) and comprising:

receiving a selected model (815) from a model library (200) comprised of a plurality of models (205), wherein a model (405) includes a plurality of properties (410);

mapping physical quantities (305) to each of the plurality of properties (410) of the selected model (815) based on matching a variable unit (530) for each of the plurality of properties (410) to standard units (310) for the physical quantities (305);

associating a semantic interpretation (535) to each of the plurality of properties (410) based on a semantic description (315) of the physical quantity (305) mapped to a specific property (620);

defining a similarity determination (500) comparing the semantic interpretation (535) of a first property (520) and the semantic interpretation (535) of a second property (525);

determining property similarities (515) comparing the specific properties (620) for each of the plurality of models (205) to the specific properties (620) of the selected model (815) by applying the similarity determination (500);

determining a model similarity (705) based on a weighted summation (700) of the property similarities (515); and

creating a similarity list (800) of similar models (805) with sufficient model similarities (810).

2. The method of embodiments 1, wherein determining property similarities (515) comprises:

determining a tuple similarity (630) between each tuple (605), where a tuple (605) includes a specific property (620) from a first model (405) and a specific property (620) from a second model (405);

creating a tuple list (625) containing unselected tuples (635) with respective tuple similarities (630);

repeating until the tuple list (625) does not contain any unselected tuples (635):

selecting the unselected tuple (635) with a highest tuple similarity (645) and remove the unselected tuples (635) containing either the specific property (620) of the first model (405) or the specific property (620) of the second model (405) of a selected tuple (650); and

determining a summation (665) of the tuple similarities (640) of the selected tuples (650) for use in the similarity determination (500).

3. The method of embodiments 1, wherein the plurality of properties (410) includes ports (415), internal variables (420), and parameters (425).

4. The method of embodiments 1, wherein the similarity determination (500) further compares the variable units (530) of the first property (520) to the variable units (530) of the second property (525).

5. The method of embodiments 1, wherein associating the semantic interpretation (535) is automated using a semantic description (315) provided by a standard description table (300).

6. The method of embodiments 1, wherein associating the semantic interpretation (535) is performed manually or a base description (320) is selected by default.

7. The method of embodiment 1, wherein the weighted summation (700) of the property similarities (515) includes a port similarity (730), a variable similarity (740), and a parameter similarity (750).

8. A data processing system (100) comprising:

a processor (102); and
an accessible memory (108), the data processing system (100) particularly configured to:

receive a selected model (815) from a model library (200) comprised of a plurality of models (205), wherein a model (405) includes a plurality of properties (410);

map physical quantities (305) to each of the plurality of properties (410) of the selected model (815) based on matching a variable unit (530) for each of the plurality of properties (410) to standard units (310) for the physical quantities (305);

associate a semantic interpretation (535) to each of the plurality of properties (410) based on a semantic description (315) of the physical quantity (305) mapped to a specific property (620);

define a similarity determination (500) comparing the semantic interpretation (535) of a first property (520) and the semantic interpretation (535) of a second property (525);
determine property similarities (515) comparing the specific properties (620) for each of the plurality of models (205) to the specific properties (620) of the selected model (815) by applying the similarity determination (500);
determine a model similarity (705) based on a weighted summation (700) of the property similarities (515); and
create a similarity list (800) of similar models (805) with sufficient model similarities (810).

9. The data processing system (100) of embodiments 8, wherein to determine property similarities (515) comprises:

determine a tuple similarity (630) between each tuple (605), where a tuple (605) includes a specific property (620) from a first model (405) and a specific property (620) from a second model (405);
create a tuple list (625) containing unselected tuples (635) with respective tuple similarities (640);
repeat until the tuple list (625) does not contain any unselected tuples (635):

select the unselected tuple (635) with a highest tuple similarity (645) and remove the unselected tuples (635) containing either the specific property (620) of the first model (405) or the specific property (620) of the second model (405) of a selected tuple (650); and

determine a summation (665) of the tuple similarities (640) of the selected tuples (650) for use in the similarity determination (500).

10. The data processing system (100) of embodiments 8, wherein the plurality of properties (410) includes ports (415), internal variables (420), and parameters (425).

11. The data processing system (100) of embodiments 8, wherein the similarity determination (500) further compares the variable units (530) of the first property (520) to the variable units (530) of the second property (525).

12. The data processing system (100) of embodiments 8, wherein to associate the semantic interpretation (535) is automated using a semantic description (315) provided by a standard description table (300).

13. The data processing system (100) of embodiments 8, wherein to associate the semantic interpretation (535) is performed manually or a base description (320) is selected by default.

14. The data processing system (100) of embodiments 8, wherein the weighted summation (700) of the property similarities (515) includes a port similarity (730), a variable similarity (740), and a parameter similarity (750).

15. A non-transitory computer-readable medium encoded with executable instructions that, when executed, cause one or more data processing systems (100) to:

receive a selected model (815) from a model library (200) comprised of a plurality of models (205), wherein a model (405) includes a plurality of properties (410);
map physical quantities (305) to each of the plurality of properties (410) of the selected model (815) based on matching a variable unit (530) for each of the plurality of properties (410) to standard units (310) for the physical quantities (305);
associate a semantic interpretation (535) to each of the plurality of properties (410) based on a semantic description (315) of the physical quantity (305) mapped to a specific property (620);
define a similarity determination (500) comparing the semantic interpretation (535) of a first property (520) and the semantic interpretation (535) of a second property (525);
determine property similarities (515) comparing the specific properties (620) for each of the plurality of models (205) to the specific properties (620) of the selected model (815) by applying the similarity determination (500);
determine a model similarity (705) based on a weighted summation (700) of the property similarities (515); and
create a similarity list (800) of similar models (805) with sufficient model similarities (810).

16. The computer-readable medium of embodiments 15, wherein to determine property similarities (515) comprises:

determine a tuple similarity (630) between each tuple (605), where a tuple (605) includes a specific property (620) from a first model (405) and a specific property (620) from a second model (405);

create a tuple list (625) containing unselected tuples (635) with respective tuple similarities (640);

repeat until the tuple list (625) does not contain any unselected tuples (635):

select the unselected tuple (635) with a highest tuple similarity (645) and remove the unselected tuples (635) containing either the specific property (620) of the first model (405) or the specific property (620) of the second model (405) of a selected tuple (650); and

determine a summation (665) of the tuple similarities (640) of the selected tuples (650) for use in the similarity determination (500).

17. The computer-readable medium of embodiments 15, wherein the plurality of properties (410) includes ports (415), internal variables (420), and parameters (425).

18. The computer-readable medium of embodiments 15, wherein the similarity determination (500) further compares the variable units (530) of the first property (520) to the variable units (530) of the second property (525).

19. The computer-readable medium of embodiments 15, wherein to associate the semantic interpretation (535) is automated using a semantic description (315) provided by a standard description table (300).

20. The computer-readable medium of embodiments 15, wherein to associate the semantic interpretation (535) is performed manually or a base description (320) is selected by default.

**Claims**

1. A method for product data management, the method performed by a data processing system (100) and comprising:

receiving a selected model (815) from a model library (200) comprised of a plurality of models (205), wherein a model (405) includes a plurality of properties (410);

mapping physical quantities (305) to each of the plurality of properties (410) of the selected model (815) based on matching a variable unit (530) for each of the plurality of properties (410) to standard units (310) for the physical quantities (305);

associating a semantic interpretation (535) to each of the plurality of properties (410) based on a semantic description (315) of the physical quantity (305) mapped to a specific property (620);

defining a similarity determination (500) comparing the semantic interpretation (535) of a first property (520) and the semantic interpretation (535) of a second property (525);

determining property similarities (515) comparing the specific properties (620) for each of the plurality of models (205) to the specific properties (620) of the selected model (815) by applying the similarity determination (500);

determining a model similarity (705) based on a weighted summation (700) of the property similarities (515); and

creating a similarity list (800) of similar models (805) with sufficient model similarities (810).

2. The method of claim 1, wherein determining property similarities (515) comprises:

determining a tuple similarity (630) between each tuple (605), where a tuple (605) includes a specific property (620) from a first model (405) and a specific property (620) from a second model (405);

creating a tuple list (625) containing unselected tuples (635) with respective tuple similarities (630);

repeating until the tuple list (625) does not contain any unselected tuples (635):

selecting the unselected tuple (635) with a highest tuple similarity (645) and remove the unselected tuples (635) containing either the specific property (620) of the first model (405) or the specific property (620) of the second model (405) of a selected tuple (650); and

determining a summation (665) of the tuple similarities (640) of the selected tuples (650) for use in the similarity determination (500).

3. The method according to any of the preceding claims, wherein the plurality of properties (410) includes ports (415), internal variables (420), and parameters (425).

**4.** The method according to any of the preceding claims, wherein the similarity determination (500) further compares the variable units (530) of the first property (520) to the variable units (530) of the second property (525).

**5.** The method according to any of the preceding claims, wherein associating the semantic interpretation (535) is automated using a semantic description (315) provided by a standard description table (300).

**6.** The method according to any of the preceding claims, wherein associating the semantic interpretation (535) is performed manually or a base description (320) is selected by default.

**7.** The method according to any of the preceding claims, wherein the weighted summation (700) of the property similarities (515) includes a port similarity (730), a variable similarity (740), and a parameter similarity (750).

**8.** A data processing system (100) comprising:

a processor (102); and
an accessible memory (108), the data processing system (100) particularly configured to:

receive a selected model (815) from a model library (200) comprised of a plurality of models (205), wherein a model (405) includes a plurality of properties (410);
map physical quantities (305) to each of the plurality of properties (410) of the selected model (815) based on matching a variable unit (530) for each of the plurality of properties (410) to standard units (310) for the physical quantities (305);
associate a semantic interpretation (535) to each of the plurality of properties (410) based on a semantic description (315) of the physical quantity (305) mapped to a specific property (620);
define a similarity determination (500) comparing the semantic interpretation (535) of a first property (520) and the semantic interpretation (535) of a second property (525);
determine property similarities (515) comparing the specific properties (620) for each of the plurality of models (205) to the specific properties (620) of the selected model (815) by applying the similarity determination (500);
determine a model similarity (705) based on a weighted summation (700) of the property similarities (515); and
create a similarity list (800) of similar models (805) with sufficient model similarities (810).

**9.** The data processing system (100) of claim 8, wherein to determine property similarities (515) comprises:

determine a tuple similarity (630) between each tuple (605), where a tuple (605) includes a specific property (620) from a first model (405) and a specific property (620) from a second model (405);
create a tuple list (625) containing unselected tuples (635) with respective tuple similarities (640);
repeat until the tuple list (625) does not contain any unselected tuples (635):

select the unselected tuple (635) with a highest tuple similarity (645) and remove the unselected tuples (635) containing either the specific property (620) of the first model (405) or the specific property (620) of the second model (405) of a selected tuple (650); and

determine a summation (665) of the tuple similarities (640) of the selected tuples (650) for use in the similarity determination (500).

**10.** The data processing system according to any of the preceding system based claims, wherein the plurality of properties (410) includes ports (415), internal variables (420), and parameters (425).

**11.** The data processing system according to any of the preceding system based claims, wherein the similarity determination (500) further compares the variable units (530) of the first property (520) to the variable units (530) of the second property (525).

**12.** The data processing system according to any of the preceding system based claims, wherein to associate the semantic interpretation (535) is automated using a semantic description (315) provided by a standard description table (300).

**13.** The data processing system according to any of the preceding system based claims, wherein to associate the semantic interpretation (535) is performed manually or a base description (320) is selected by default.

**14.** The data processing system according to any of the preceding system based claims, wherein the weighted summation (700) of the property similarities (515) includes a port similarity (730), a variable similarity (740), and a parameter similarity (750).

**15.** A non-transitory computer-readable medium encoded with executable instructions that, when executed, cause one or more data processing systems (100) to perform a method according to any of the claims 1 to 7.

## FIG. 1

200

| Model Library |
| --- |
| Model |
| Model |
| Model |
| Model |
| Model |

205

210
210
210
210
210

300

Figure 2

305    310                                            315

| # | Physical Quantities | Standard Units | Semantic Description |
| --- | --- | --- | --- |
| 1 | t, $\Delta t$ | s; us; day; h ;hr; min; month; ms; week; year | Time; Duration; Time Span; Delay <br> 320 |
| 2 | S | m; mm; um; micron; km; cm; dm; ft; in; mi; NM; uin; yd; ly | Length; Distance; Displacement; Postion; Thickness; Geometric Distance; Diameter; Radius |
| 3 | m | kg; tonne; g; mg; gr; lb; Mg; oz; slug; stone | Mass; Inertia |
| 4 | I | A; mA; kA; uA | Current; Electric Current; Valve Rated Current |
| 5 | T, $T_a$ | °K; °C; °R; °Re | Temperature; Absolute Temperature |
| 6 | Q, $V_{dot}$ | L/min; $m^3/s$; $m^3/s$; $cm^3/s$; $dm^3/s$; $ft^3/s$; $m^3/s$; $ft^3/min$; gpm; $in^3/s$; L/h; L/hr; L/min; L/s; $m^3/h$; $m^3/min$; $mm^3/s$; $gal_{uk}/h$; $gal_{uk}/min$; $gal_{uk}/s$; $gal_{us}/h$; $gal_{us}/min$; $gal_{us}/s$; $yd^3/min$; $yd^3/s$ | Volumetric Flow Rate; Flow; Flow Rate; Volume Flow Rate |

Figure 3

400

405

| Model: | GMCGCV3 | |
|---|---|---|
| Property | Variable Units | Semantic Interpretation |
| **Ports** | | |
| Port$_1$ | [W] | Hydraulic Power |
| | [m] | Diameter |
| | [K] | Temperature |
| Port$_2$ | [W] | Hydraulic Power |
| | [g/s] | Mass Flow |
| | [K] | Temperature |
| | [bar] | Pressure |
| **Internal Variables** | | |
| hconv | [W/m$^2$/$^{\circ}$C] | Convective Exchange Coefficient |
| Re | [null] | No Interpretation |
| Pr | [null] | No Interpretation |
| Gr | [null] | No Interpretation |
| NuFree | [null] | No Interpretation |
| NuForced | [null] | No Interpretation |
| **Parameters** | | |
| Carea | [m*n] | Area |
| Cdim | [m] | Length |
| Theta | [$^{\circ}$(degree)] | Angle |
| Width | [m] | Length |
| Length | [m] | Length |
| Radius | [m] | Radius |
| RaTrans1 | [null] | No Interpretation |
| RaTrans2 | [null] | No Interpretation |
| ReTrans1 | [null] | No Interpretation |
| ReTrans2 | [null] | No Interpretation |
| kHeat | [null] | No Interpretation |

415
430
410
420
425

# Figure 4

500

| Property | Variables Units | Semantic Interpretation |
|---|---|---|
| Port₁ | W | Hydraulic Power |
| | m | Diameter |
| | K | Temperature |
| Port₂ | W | Hydraulic Power |
| | g/s | Mass Flow |
| | K | Temperature |
| | bar | Pressure |
| S(Port₁,Port₂) | | 0.4 |

Figure 5

600

| Model (m) | Property |
|---|---|
| m₁ | A, B, C, D |
| m₂ | E, F, G |

| Tuple | Tuple Similarity |
|---|---|
| AG | 0.8463 |
| CG | 0.7624 |
| DE | 0.7324 |
| AE | 0.6561 |
| DG | 0.6328 |
| BF | 0.6205 |
| DF | 0.5971 |
| BE | 0.5164 |
| CF | 0.4891 |
| BG | 0.4051 |
| AF | 0.3751 |
| CE | 0.3652 |
| Sumₚ(m₁,m₂) | 2.1992 |

Figure 6

700

| | |
|---|---|
| $m_1$ | GMCGCV3 |
| $m_2$ | TFGCV3 |
| $w_1$ | 0.3 |
| $w_2$ | 0.3 |
| $w_3$ | 0.4 |
| $S_{port}(m_1, m_2)$ | 1.0000 |
| $S_{par}(m_1, m_2)$ | 1.0000 |
| $S_{ilva}(m_1, m_2)$ | 1.0000 |
| $S_m(m_1, m_2)$ | 1.0000 |

## Figure 7

800

| | Search: | Selected Model | Description |
|---|---|---|---|
| | | GMCGCV3 | External Mixed Convective Exchange with Variable Signal and Gas-Mixture Port |
| Results: | | | |
| Number | Model Similarity | Similar Models | Description |
| 1 | 1.0000 | TFGCV3 | External Mixed Convective Exchange with Variable Signal and Thermal-Hydraulic Port |
| 2 | 1.0000 | TPGCV3 | External Mixed Convective Exchange with Variable Signal and Thermal-Pneumatic Port |
| 3 | 0.8182 | GMGCV2 | External Mixed Convective Exchange with Gas-Mixture Port |
| 4 | 0.8182 | TFGCV2 | External Mixed Convective Exchange with Thermal-Hydraulic Port |
| 5 | 0.8182 | TPGCV2 | External Mixed Convective Exchange with Thermal-Pneumatic Port |
| 6 | 0.6935 | THGCV4 | External Mixed Convective Exchange with Environmental Moist Air Port |

## Figure 8

900

905
RECEIVE SELECTED MODEL FROM
A MODEL LIBRARY COMPRISING
A PLURALITY OF MODELS

910
MAP PHYSICAL QUANTITIES
TO UNITS FOR EACH OF THE
PLURALITY OF PROPERTIES

915
ASSOCIATE A SEMANTIC
DESCRIPTION TO VARIABLE UNITS

920
DEFINE A SIMILARITY DETERMINATION
COMPARING VARIABLE
UNITS OF A FIRST PROPERTY
AND A SECOND PROPERTY

925
DETERMINE PROPERTY SIMILARITIES
COMPARING THE PROPERTIES OF THE
PLURALITY OF MODELS TO THE
PROPERTIES OF THE SELECTED MODEL

930
DETERMINE A MODEL SIMILARITY
BASED ON A WEIGHTED SUMMATION
OF THE PROPERTY SIMILARITIES

935
CREATE A SIMILARITY
LIST OF SIMILAR MODELS

Figure 9

1000

1005

DETERMINE A TUPLE SIMILARITY
BETWEEN EACH TUPLE

1010

ORDER THE TUPLES IN A
TUPLE LIST BASED ON A
HIGHEST TUPLE SIMILARITY

1015

SELECT A TUPLE WITH THE
HIGHEST TUPLE SIMILARITY AND
REMOVE ALL THE REMAINING
TUPLES CONTAINING EITHER
SPECIFIC PROPERTY

1020

DETERMINE A RELATIVE TUPLE
FREQUENCY OF AN OCCURRENCE OF
A WORD TUPLE IN A DESCRIPTION
SENTENCE OF THE MODEL LIBRARY

1025

DETERMINE A SUMMATION OF THE
TUPLE SIMILARITIES OF THE
SELECTED TUPLES TO USE IN THE
SIMILARITY DETERMINATION FOR
THE PROPERTY SIMILARITY

1030

RETURN SIMILARITY DETERMINATION
BETWEEN THE PROPERTIES OF A
FIRST MODEL AND A SECOND MODEL

Figure 10

Europäisches
Patentamt

European
Patent Office

Office européen
des brevets

# EUROPEAN SEARCH REPORT

Application Number

EP 15 19 3574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/214841 A1 (GARERA NIKESH LUCKY [US] ET AL) 31 July 2014 (2014-07-31) * abstract; figure 4 * * paragraph [0018] - paragraph [0020]; figure 1 * ----- | 1-15 | INV. G06F17/30 |
| X | US 2009/076998 A1 (OCKE KIRK J [US] ET AL) 19 March 2009 (2009-03-19) * abstract; figure 3 * ----- | 1-15 | |
| | | | TECHNICAL FIELDS SEARCHED (IPC) |
| | | | G06F |

The present search report has been drawn up for all claims

| Place of search | Date of completion of the search | Examiner |
|---|---|---|
| Munich | 10 March 2016 | Deane, Inigo |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.................................................................

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 15 19 3574

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2016

| Patent document cited in search report | Publication date | Patent family member(s) | Publication date |
|---|---|---|---|
| US 2014214841 A1 | 31-07-2014 | NONE | |
| US 2009076998 A1 | 19-03-2009 | NONE | |

EPO FORM P0459

For more details about this annex : see Official Journal of the European Patent Office, No. 12/82